# EUROPÄISCHE PATENTANMELDUNG

(11) **EP 1 281 813 A2**
(43) Veröffentlichungstag der Anmeldung: **05.02.2003**
(21) Anmeldenummer: 02017100.5
(22) Anmeldetag: 30.07.2002
(51) Int. Cl.: E01C 9/00, A01G 13/02, E01F 9/011

(54) **Abdeckplatte, insbesondere Baumscheibe**

(30) Priorität: 31.07.2001 DE 20112623 U
(71) Anmelder: Gärtner, Holger, Dr., 73431 Aalen (DE)
(72) Erfinder: Gärtner, Holger, Dr., 73431 Aalen (DE)
(74) Vertreter: Kohl, Karl-Heinz

(57) **Zusammenfassung**

Die Abdeckplatte hat eine Durchstecköffnung (2) und/oder einen in diese mündenden Einführschlitz (3) für ein zu schützendes aufrechtes Teil, wie einen Baumstamm. Bei Verwendung als Baumscheibe schützt die Abdeckplatte im Freiland Nutzpflanzen davor, daß ihr Wachstum durch Unkraut gehemmt wird. Um die Abdeckplatte (1) einfach und kostengünstig auszubilden, ohne daß besondere Befestigungsmittel erforderlich sind, um sie am Boden sicher zu befestigen, ist die Abdeckplatte (1) aus Kunststoff- und/oder Gummiteilchen hergestellt, die in ein elastisches Bindemittel eingebettet sind. Auf diese Weise kann die Abdeckplatte (1) einfach und kostengünstig hergestellt werden. Die Platte (1) hat darüber hinaus eine lange Haltbarkeit und hohe Elastizität, durch die sie einen sicheren Halt am Boden hat, ohne daß Halteteile erforderlich sind. Die Abdeckplatte eignet sich nicht nur für die Land- und Forstwirtschaft, sondern auch im Freizeitbereich zum Schutz von Bäumen, Pfosten, Stangen und dergleichen.

## Beschreibung

Die Erfindung betrifft eine Abdeckplatte, insbesondere eine Baumscheibe, nach dem Oberbegriff des Anspruches 1.

Es sind Baumscheiben aus verrottbarem Material bekannt, die eine zentrale Öffnung und einen in diese mündenden radialen Einführschlitz aufweisen. Solche Baumscheiben schützen im Freiland Nutzpflanzen davor, daß ihr Wachstum durch Unkraut gehemmt wird. Um das Unkraut zu unterbinden, wird es mechanisch entfernt, wie gejätet, oder es wird ihr Wachstum durch Herbizide unterbunden. Eine weitere Methode ist das Mulchen, bei dem um die Nutzpflanze herum entweder organisches Material aufgebracht oder der Boden mit Folie abgedeckt wird. Alle diese Methoden sind zeitaufwendig und müssen bei mehrjährigen Pflanzen häufig wiederholt werden. Zudem besteht bei den mechanischen Verfahren die Gefahr, daß das oberflächennahe Wurzelwerk der Nutzpflanze beschädigt wird. Auch der Einsatz von Herbiziden ist nicht immer unbedenklich.

Der Erfindung liegt die Aufgabe zugrunde, eine Abdeckplatte dieser Art so auszubilden, daß sie bei einfacher kostengünstiger Ausbildung ohne besondere Befestigungsmittel einen sicheren Halt am Boden gewährleistet.

Diese Aufgabe wird bei einer Abdeckplatte der gattungsbildenden Art erfindungsgemäß mit den kennzeichnenden Merkmalen des Anspruches 1 gelöst.

Infolge der erfindungsgemäßen Ausbildung kann die Abdeckplatte einfach und kostengünstig hergestellt werden. Eine so hergestellte Abdeckplatte hat nicht nur eine lange Haltbarkeit, sondern infolge ihrer Elastizität gewährleistet sie auch einen sicheren Halt am Boden, ohne daß sie mit zusätzlichen Halteteilen am Boden befestigt werden muß. Da die Abdeckplatte sehr preisgünstig hergestellt werden kann, eignet sie sich nicht nur für die Land- und Forstwirtschaft, sondern auch im Freizeitbereich, zum Schutz von Bäumen, Pfosten, Stangen, Masten oder dergleichen. Sie kann vorteilhaft auch im Straßenbereich, zum Beispiel um Begrenzungspfosten oder Stangen, die Verkehrsschilder tragen, angeordnet werden, um ein problemloses Mähen im Bereich dieser Teile zu gewährleisten.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:
- Fig. 1: eine erfindungsgemäße Abdeckplatte in Draufsicht,
- Fig. 2: einen Schnitt längs der Linie II-II in Fig. 1,
- Fig. 3: eine weitere Ausführungsform einer erfindungsgemäßen Abdeckplatte,
- Fig. 4: die Abdeckplatte gemäß Fig. 3 im Schnitt längs der Linie IV-IV in Fig. 3,
- Fig. 5: eine dritte Ausführungsform einer erfindungsgemäßen Abdeckplatte in perspektivischer Darstellung,
- Fig. 6: die Abdeckplatte nach Fig. 5 in teilweise verformter Lage,
- Fig. 7: eine weitere Ausführungsform einer erfindungsgemäßen Abdeckplatte in Draufsicht,
- Fig. 8: einen Schnitt längs der Linie VIII-VIII in Fig. 7,
- Fig. 9: eine weitere Ausführungsform einer erfindungsgemäßen Abdeckplatte in schematischer perspektivischer Darstellung,
- Fig. 10: eine weitere Ausführungsform einer erfindungsgemäßen Abdeckplatte in perspektivischer Darstellung von oben,
- Fig. 11: die Abdeckplatte nach Fig. 10 in perspektivischer Darstellung von unten,
- Fig. 12: die Abdeckplatte gemäß den Fig. 10 und 11 im Querschnitt.

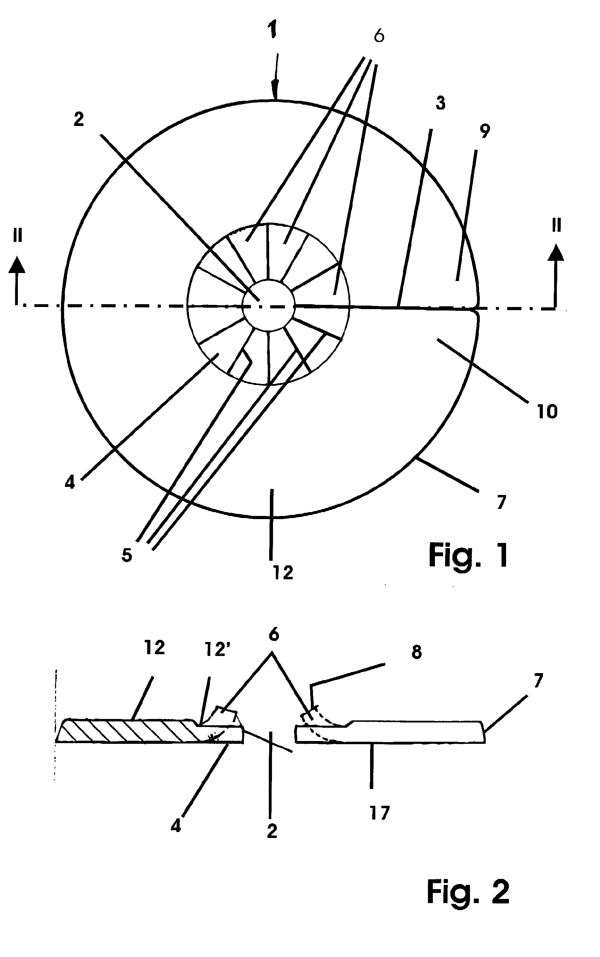

Die Fig. 1 und 2 zeigen eine Abdeckplatte 1, die zum Beispiel um Baumstämme, Stämme von Weinreben oder anderen Pflanzen oder aber um Pfosten, Stangen und dergleichen gelegt wird, um die Stämme beim Heranwachsen gegen Schäden durch Unkraut bzw. die Pfosten und dergleichen beim Mähen zu schützen.

Die Abdeckplatte 1 weist eine zentrale Durchstecköffnung 2 sowie einen radialen Einführschlitz 3 auf. Er erstreckt sich vom äußeren Plattenrand 7 bis zur Öffnung 2. Die Abdeckplatte ist im Ausführungsbeispiel als runde Platte ausgebildet. Sie kann aber auch ovale, trapezförmige oder andere eckige oder eine beliebige andere Umrißform aufweisen. Vorteilhaft besteht die Abdeckplatte 1 aus wasserdurchlässigem und witterungsbeständigem Material. Sie ist darüber hinaus elastisch bzw. flexibel ausgebildet. Vorzugsweise besteht die Abdeckplatte 1 aus Gummi-, Schaumstoff- oder Kunststoffgranulat, das mit einem elastischen Bindemittel, wie vorzugsweise Polyurethan oder Polypropylen, vernetzt ist. Die Abdeckplatte 1 kann aber auch aus Recyclingmaterial hergestellt sein. Anstelle von Granulat können auch entsprechende Reststoffe verwendet werden. Für den Fall, daß die Abdeckplatte zum Schutz von Pfosten, Stangen oder dergleichen vorgesehen ist, kann sie auch aus wasserundurchlässigem Material bestehen. Die Herstellung der Abdeckplatte 1 aus Recyclingmaterial wirkt sich vor allem vorteilhaft auf die Herstellungskosten aus, da die Abdeckplatte dadurch einfach und kostengünstig hergestellt werden kann.

Die in den Fig. 1 und 2 dargestellte Abdeckplatte 1 dient als Baumscheibe, wo sie vor allem in der Landwirtschaft, in Baumschulen, Obstplantagen oder in der Forstwirtschaft eingesetzt wird. Sie wird hierzu um die entsprechende Nutzpflanze angeordnet und soll verhindern, daß deren Wachstum durch Konkurrenzpflanzen, insbesondere Unkraut, gehemmt wird. Um das Wachstum von Unkraut zu unterbinden, wird die Baumscheibe 1 so um den Baumstamm gelegt, daß dieser durch die zentrale Öffnung 2 ragt und die Ringscheibe den Boden um den Baumstamm abdeckt. Da die Baumscheibe eine ausreichende Elastizität aufweist, kann sich die Baumscheibe gut an unebenen Untergrund anpassen. Dabei kann die Baumscheibe 1 beispielsweise eine Dicke von etwa 1 cm haben, so daß sie ein entsprechendes Gewicht hat. Die Baumscheibe 1 wird in diesem Fall beispielsweise durch Wind nicht vom Boden abgehoben.

Zur Montage am Baumstamm oder dergleichen wird die Baumscheibe 1 so verformt, daß die beiden rechts und links vom Einführschlitz 3 gebildeten Scheibenteile 9 und 10 quer zur Scheibenebene voneinander weggebogen werden. Die Baumscheibe 1 läßt sich dann bequem um den Baumstamm legen. Da die Scheibe 1 dicht am Untergrund anliegt, wird ein unerwünschtes Wachstum der Konkurrenzpflanzen einwandfrei vermieden. Außerdem wird erreicht, daß die Scheibe 1 infolge ihres relativ hohen Eigengewichtes am Boden fest aufliegt, so daß sie bei Wind nicht vom Boden abgehoben wird.

Damit die Scheibe 1 das Wachstum der zu schützenden Pflanze bzw. des Baumes, bei dem der Stammdurchmesser zunimmt, nicht behindert, weist die Öffnung 2 eine sie umgebende, vorteilhaft ringscheibenförmige Randzone 4 auf, die eine Vielzahl radial verlaufender Schlitze 5 aufweist, zwischen denen sektorförmige Zungen 6 gebildet sind. Die Schlitze 5 erstrecken sich vom Rand der zentralen Öffnung 2 aus beispielsweise über ein Drittel des radialen Abstandes zwischen dem Öffnungsrand und dem Rand 7 der Baumscheibe 1. Die Zungen 6 sind elastisch biegbar und werden bei zunehmender Stammdicke elastisch nach oben und auseinander gebogen (Fig. 2), so daß die Öffnung 2 vergrößert wird. Dadurch kann die Pflanze ungehindert wachsen. Vorteilhaft hat die Baumscheibe 1 in der Randzone 4 geringere Dicke als im übrigen Bereich, um so die Flexibilität der Zungen 6 zu erhöhen.

Vorteilhaft ist die Verschwächung der Randzone 4 durch eine Ausnehmung 12' an der Oberseite 12 der Platte 1 gebildet. Der äußere Rand 7 der Baumscheibe 1 ist vorteilhaft kegelstumpfförmig abgeschrägt, was die Auflage der Scheibe auf dem Boden verbessert und ein Abheben vom Boden verhindert.

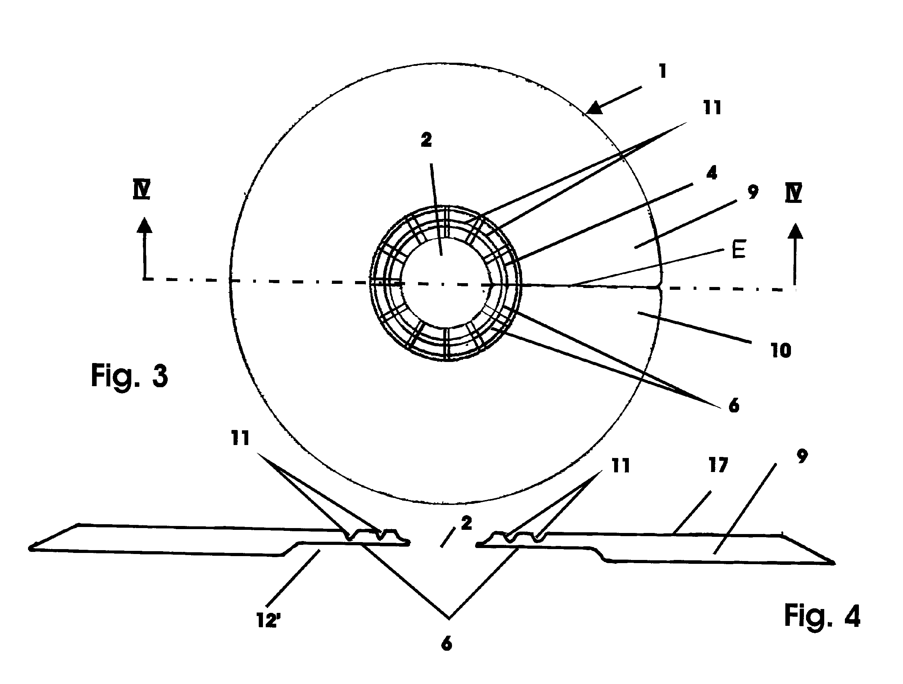

Die radialen Schlitze 5 der Randzone 4 gewährleisten nicht nur, daß dem Dickenzuwachs des jeweiligen Stammes kein Widerstand entgegengesetzt wird; die Baumscheibe 1 läßt sich dadurch auch problemlos um Stämme, Pfosten und dgl. unterschiedlichster Dicke anordnen. Die Öffnung 2 kann bei Bedarf einfach vergrößert werden, wenn, wie beim Ausführungsbeispiel nach den Fig. 3 und 4, die Randzone 4 mit koaxial zur Öffnungsachse verlaufenden Rillen 11 versehen ist. Sie bilden ringförmige Sollbruchstellen, an denen die Zungen 6 leicht, auch vor Ort, abgeschert werden können, um auf diese Weise die Weite der zentralen Öffnung 2 zu vergrößern. Vorteilhaft weist die ringförmige Randzone 4 zwei kreisrunde Sollbruchstellen 11 auf, die jeweils V-förmiges Querschnittsprofil haben. Die Sollbruchstellen 11 sind vorteilhaft an der ebenen Unterseite 17 der Platte 1 vorgesehen. In der Oberseite 12 ist die Scheibe 1 entsprechend der vorhergehenden Ausführungsform mit einer zentralen Vertiefung 12' versehen, die die in der Dicke verringerte Randzone 4 bestimmt.

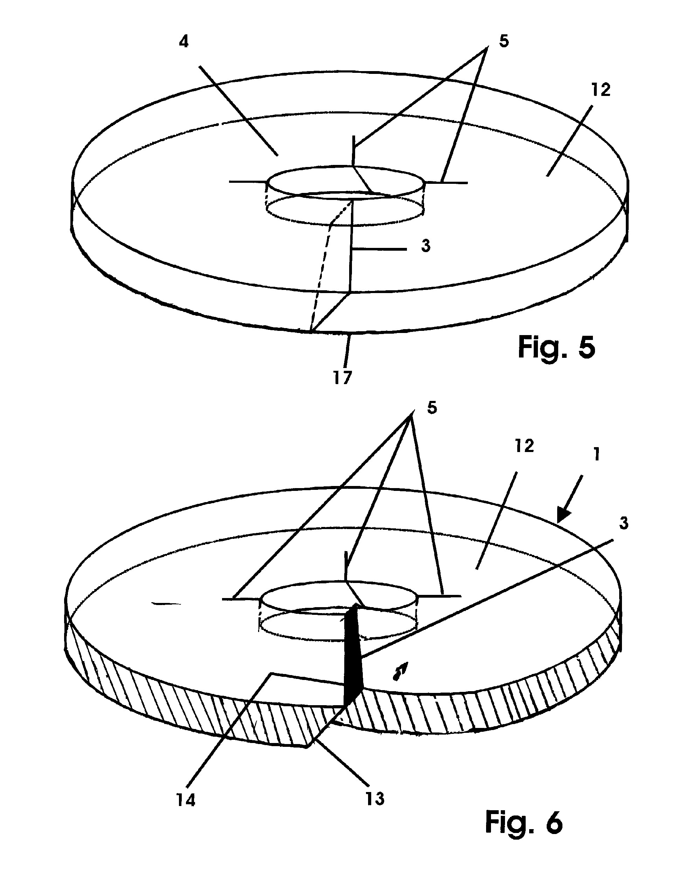

Um zu verhindern, daß Unkraut oder dergleichen durch den Einführschlitz 3 bzw. die Radialschlitze 5 durch die Abdeckplatte 1 hindurchwachsen, sind diese Schlitze nicht senkrecht zur Plattenober- bzw. -unterseite 12 bzw. 17, sondern schräg zu diesen vorgesehen (Fig. 5, 6). Die Seitenwände 13 und 14 des Einführschlitzes 3 sind so geneigt, daß in Draufsicht gemäß Fig. 6 die Wand 14 von der Wand 13 übergriffen wird. Die Wand 14 schließt mit der Oberseite 12 einen stumpfen und die Wand 13 einen spitzen Winkel ein. Entsprechend sind auch die Wände der Schlitze 5 geneigt zur Ober- bzw. Unterseite 12, 17 der Platte 1 angeordnet. Infolge dieser geneigten Ausbildung der Schlitzwände wird beim Befestigen der Baumscheibe an einem Baumstamm oder dergleichen, wenn die Randzone 4 bzw. der Einführschlitz 3 aufgeweitet werden, kein vertikaler Spalt gebildet, durch den Unkraut oder dergleichen nach oben wachsen kann.

Die radialen Schlitze 5 haben beim Ausführungsbeispiel nach den Fig. 5 und 6 einen Winkelabstand von 90°, so daß vier elastisch biegbare Zungen 6 gebildet werden. Selbstverständlich können die Schlitze 5 auch einen kleineren Winkelabstand voneinander haben entsprechend den vorigen Ausführungsbeispielen, so daß eine größere Zahl von Zungen 6 vorgesehen ist. Einer der Schlitze 5 wird wie bei den vorigen Ausführungsformen durch einen Teil des Einführschlitzes 3 gebildet.

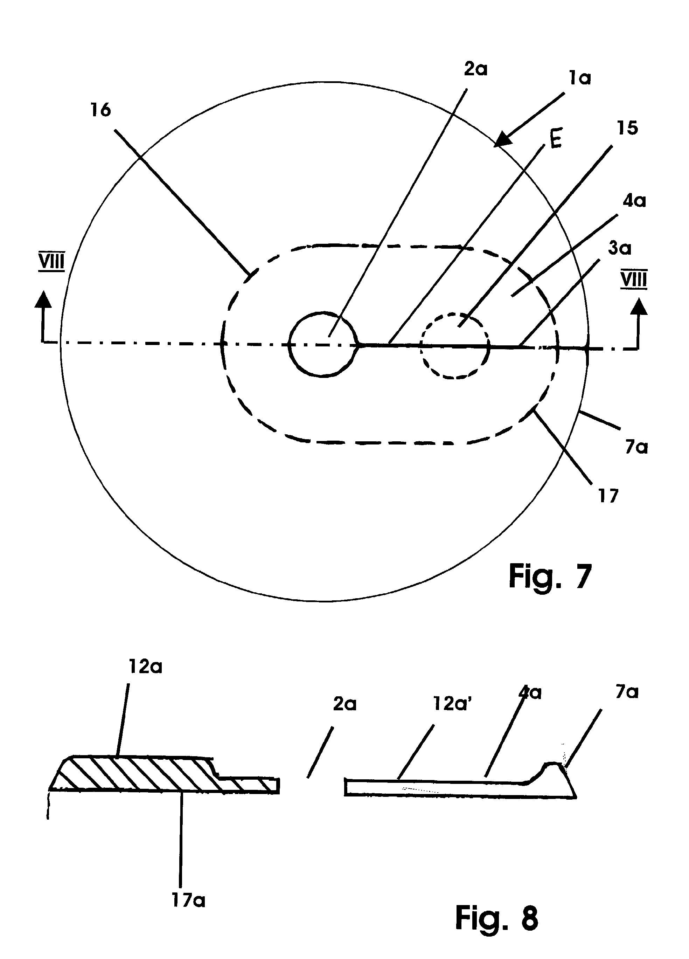

Die Fig. 7 und 8 zeigen eine weitere Ausführungsform einer Abdeck- bzw. Baumscheibe 1a, bei der die verschwächte Randzone 4a ovalen bzw. elliptischen Umriß hat und außermittig zur Platte vorgesehen ist. Vorteilhaft liegt die Randzone 4a symmetrisch zu einer Radialebene E der Abdeckplatte 1a und erstreckt sich mit geringem Abstand vom Plattenrand 7a über mehr als den halben Durchmesser der Platte. In der Randzone 4a ist die Durchstecköffnung 2a für den Baumstamm wiederum zentral zur Platte 1 angeordnet. Vorteilhaft ist die Öffnung 2a so vorgesehen, daß ihre Achse mit der Krümmungsachse des innen liegenden teilkreisförmigen Randabschnittes 16 der Randzone 4a zusammenfällt. In die Öffnung 2a mündet der radiale Einführschlitz 3a, der in der Radialebene E der Randzone 4a liegen kann. Bei dieser Baumscheibe 1a kann, wie mit gestrichelten Linien in Fig. 7 dargestellt ist, mit Abstand neben der zentralen Öffnung 2a jederzeit vor Ort in der verschwächten Randzone 4a eine weitere Öffnung 15 angebracht werden. Sie kann zur Aufnahme eines Befestigungsteiles, wie eines Pfostens, dienen, der mit dem Baumstamm fest verbunden ist. Bei der Aufzucht sind die Bäume in der Regel mit Pfosten verbunden, die dicht benachbart zum Stamm angeordnet sind. Bei der Baumscheibe 1a kann ein solcher Pfosten durch die Öffnung 15 ragen, die in der verschwächten Randzone 4a problemlos vor Ort mit einem Messer oder einer Schere herausgeschnitten werden kann. Es können aber auch Sollbruchstellen vorgesehen sein, um die Öffnung 15 einfach und schnell herstellen zu können. Vorteilhaft können solche Sollbruchstellen wie die Sollbruchstellen 11 gemäß Fig. 4 ausgebildet sein. Außerdem können radiale Schlitze am Rand der Öffnung 15 vorgesehen werden, so daß die Öffnung 15 leicht an die jeweilige Dicke des betreffenden Pfostens angepaßt werden kann. Auch bei dieser Baumscheibe 1a ist der äußere Rand 7a vorteilhaft so abgeschrägt, daß die Unterseite 17a der Scheibe 1a größeren Umriß hat als ihre Oberseite 12a. Die Ausnehmung 12a' zur Bildung der verschwächten Zone 4a ist ebenfalls an der Oberseite 12a vorgesehen.

Die beschriebenen Scheiben 1, 1a lassen sich problemlos an den jeweiligen Einsatzort transportieren. Sie eignen sich für eine Vielzahl verschiedener Einsatzfälle und Produkte. Vorteilhaft werden sie in der Landwirtschaft in Baumschulen, Obstplantagen, in der Forstwirtschaft sowie im Weinbau verwendet. Die beschriebene Abdeckscheibe 1, 1a eignet sich aber auch zur Verwendung in Gärten, Parks oder anderen Grünflächen, wo sie zum Schutz von Bäumen, aber auch von Pfosten, Stangen oder sonstigen aufrecht stehenden Gegenständen eingesetzt werden können. Die Abdeckplatte 1, 1a kann außerdem im Straßenbereich, bspw. in Grünanlagen zum Schutz von Befestigungs- und Begrenzungspfosten oder auch für Haltestangen von Schildern und dergleichen eingesetzt werden, um diese vor Beschädigung beim Mähen zu schützen. Je nach Einsatz und Anwendungsfall kann die Abdeckscheibe 1, 1a in einer beliebigen Farbe hergestellt werden. So eignet sich beispielsweise eine grüne oder braune Farbe für die Verwendung in der Landwirtschaft, in Gärten und dergleichen, während im Straßenbereich häufig auch eine weiße Abdeckscheibe geeignet sein kann. Zur Verwendung in Grünanlagen, wie beispielsweise Golfplätzen oder dergleichen, eignet sich zudem eine Abdeckscheibe, bei der auf der Oberseite ein Kunststoffrasen vorgesehen, wie verklebt, mit Klammern oder sonstigen Halteteilen befestigt ist. Die Abdeckscheibe kann auch über ihre gesamte Oberseite 12, 12a eine Vertiefung aufweisen, in der eine Ringscheibe aus Kunstrasen eingesetzt ist.

Es kann zweckmäßig sein, die Abdeckplatte so im Boden versenkt anzuordnen, daß ihre Oberseite mit der Oberseite einer Grünfläche, eines Straßenbelages oder dergleichen in einer Ebene liegt. Auch in dem Fall, in dem die Baumscheibe einen Kunstrasen aufweist, sollte die Abdeckscheibe entsprechend versenkt im Untergrund angeordnet werden.

Vorteilhaft wird die Abdeckscheibe 1, 1a, wenn sie das Unkrautwachstum verhindern soll, zum Mähen weggenommen und danach wieder an die zu schützende Stelle gelegt. Da die Abdeckscheibe 1, 1a relativ elastisch ist und dennoch eine gewisse Eigensteifigkeit aufweist, läßt sie sich leicht entfernen und wieder anordnen.

Bei den beschriebenen und dargestellten Ausführungsformen müssen der Einführschlitz 3, 3a und/oder die Schlitze 5 nicht radial verlaufen, sondern können unter einem spitzen Winkel zur Radialen liegen.

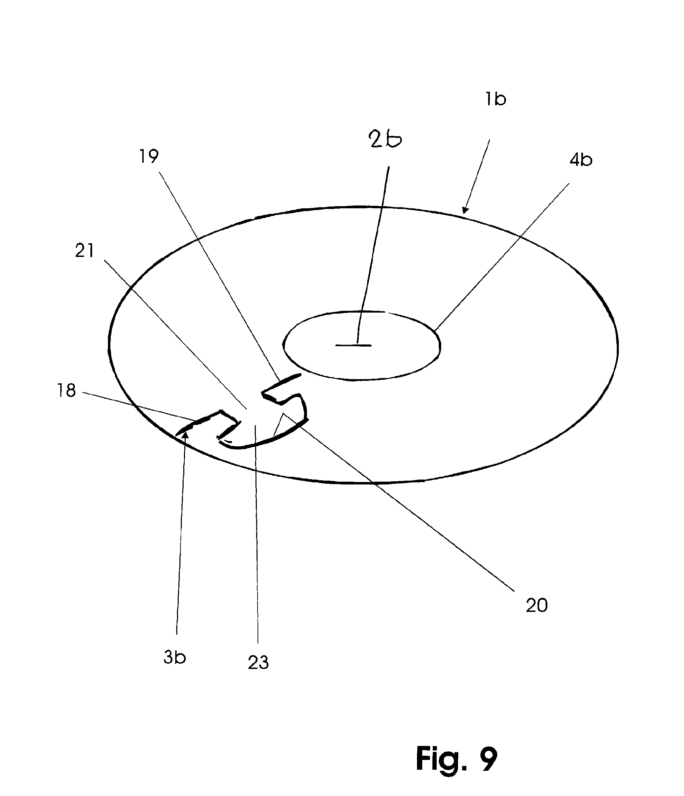

Fig. 9 zeigt eine Abdeckplatte 1b, bei der der Einführschlitz 3b nach Fertigstellung der Platte 1b durch Ausstanzen gebildet wird. Auf diese Weise kann der Schlitz 3b einfach und kostengünstig hergestellt werden. Um zu vermeiden, daß sich der Schlitz 3b während des Einsatzes der Platte 1b verbreitert bzw. erweitert, wird er nicht gerade, sondern teilweise profiliert ausgebildet. Er weist einen mittleren Profilabschnitt 20 auf, der zwischen einem geraden Anfangs- und Endabschnitt 18 und 19 liegt, die miteinander fluchten und jeweils radial verlaufen. Der Profilabschnitt 20 ist so ausgebildet, daß er zwischen den graden Abschnitten 18, 19 eine etwa pilz- bzw. T-förmige Lasche 23 begrenzt, die sich in Umfangsrichtung der Platte 1b erstreckt. Die Lasche 23 hat ein in Umfangsrichtung verlaufendes Halsteil 21 sowie einen im Umriß teilkreisförmigen Kopfteil 22. Die Lasche 23 kann aber auch beliebig andere Form aufweisen, wie beispielsweise T-förmig, teilkreisförmig oder dergleichen ausgebildet sein.

Durch die beschriebene profilierte Ausbildung des Schlitzes 3b wird auf der einen Seite des Schlitzes 3b die pilzförmige Lasche 23 gebildet, die in Schließstellung vom Profilabschnitt 20 des Schlitzes begrenzt wird. Die Lasche 23 und der Profilabschnitt 20 greifen nutfederartig ineinander.

Der die zentrale Öffnung 2b umgebende Bereich 4b der Platte 1b kann wie bei den zuvor beschriebenen Ausführungsformen nach den Fig. 1, 2 verschwächt, mit einem radialen Schlitz oder wie bei der Ausführungsform nach den Fig. 7, 8 mit einer zweiten Öffnung für ein Stützteil oder dergleichen versehen sein.

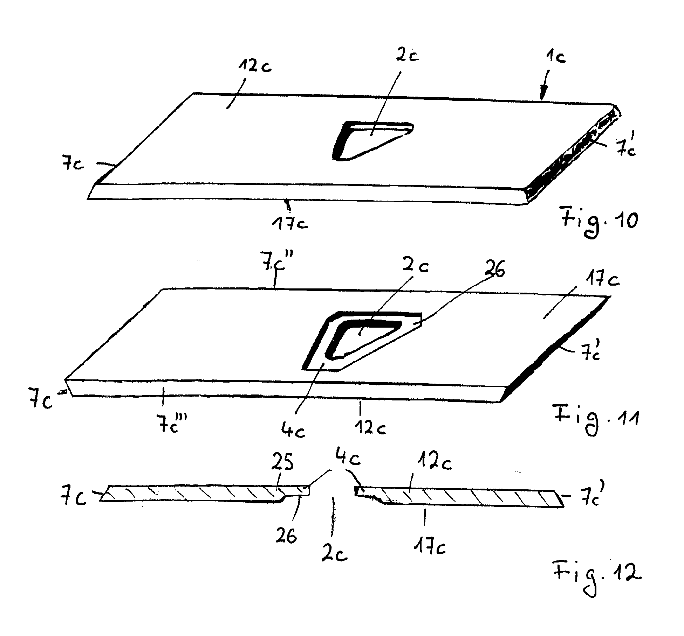

Die in den Fig. 10 bis 12 dargestellte Abdeckplatte 1c ist vorteilhaft für den Straßenbereich, insbesondere zum Schutz von Verkehrsschildern, Straßenbegrenzungsposten und dergleichen vorgesehen. Sie unterscheidet sich von der Abdeckplatte 1 gemäß den Fig. 1 und 2 im wesentlichen dadurch, daß sie rechteckigen Umriß hat und ihre zentrale Öffnung 2c annähernd dreieckförmig ausgebildet ist. Die Öffnung 2c kann selbstverständlich auch jede andere Kontur aufweisen. In jedem Fall ist es vorteilhaft, wenn die Umrißform an die Stange des Verkehrsschildes bzw. an den Pfosten oder dergleichen angepaßt ist. Zumindest die Schmalseiten 7c, 7c' der Platte 1c sind abgeschrägt. Sie verlaufen von der Plattenunterseite 17c unter einem spitzen Winkel nach oben zur Plattenoberseite 12c. Die Längsränder 7c" und 7c"' können ebenfalls schräg verlaufen.

Die Öffnung 2c ist entsprechend wie bei der Ausführungsform nach den Fig. 1 und 2 von einer verschwächten Randzone 4c begrenzt, deren eine Außenseite 25 mit der Oberseite 12c der Platte 1c in einer Ebene liegt (Fig.12). Die andere Außenseite 26 ist gegenüber der Unterseite 17c der Platte 1 etwa um die halbe Plattendicke zurückversetzt. Durch die relativ geringe Dicke hat die Randzone 4c eine hohe Elastizität, durch die sich die Abdeckplatte 1c leicht von oben über das Stangen- bzw. Pfostenende schieben läßt. Selbstverständlich kann die Abdeckplatte 1c zur weiteren Erleichterung ihrer Montage auch einen Einführschlitz aufweisen, der sich von dem einen Rand 7c, 7c' bis 7c"' bis in die Öffnung 2c erstreckt. Die Randzone 4c kann außerdem Querschlitze aufweisen, um die Montage an der Stange oder dem Pfosten weiter zu vereinfachen. Die Abdeckplatte 1c besteht vorzugsweise aus demselben Material wie die Platte 1. Mit der Abdeckplatte 1c lassen sich vorwiegend Verkehrsschilder und Straßenpfosten im Straßenbereich oder andere Pfosten und Stangen oder auch Bäume im Freizeitbereich vor Beschädigung schützen. Soll die Abdeckplatte 1c für eine Stange mit größerem Querschnitt verwendet werden, kann die verschwächte Zone 4c herausgetrennt werden. Selbstverständlich kann auf der Plattenoberseite 12c auch ein Kunstrasen oder ein ähnliches Verkleidungsteil vorgesehen werden.

## Patentansprüche

1. Abdeckplatte, insbesondere Baumscheibe, mit mindestens einer Durchstecköffnung und/oder mindestens einem in die Durchstecköffnung mündenden Einführschlitz für ein zu schützendes aufrechtes Teil, insbesondere einen Baumstamm, Pfosten oder dergleichen,
**dadurch gekennzeichnet, daß** die Abdeckplatte (1, 1a, 1b, 1c) aus Kunststoff- und/oder Gummiteilchen besteht, die in ein elastisches Bindemittel eingebettet sind.

2. Abdeckplatte nach Anspruch 1,
**dadurch gekennzeichnet, daß** die vorteilhaft aus Recyclingmaterial bestehenden Gummi- und/oder Kunststoffteilchen Granulate sind und/oder aus Reststoffen bestehen.

3. Abdeckplatte nach Anspruch 1 oder 2,
**dadurch gekennzeichnet, daß** die Kunststoffteilchen Schaumstoffteilchen sind, die vorteilhaft aus Schaumstoffreststoffen bestehen.

4. Abdeckplatte nach einem der Ansprüche 1 bis 3,
**dadurch gekennzeichnet, daß** das Bindemittel aus Polyurethan und/oder Polypropylen besteht.

5. Abdeckplatte, insbesondere Baumscheibe, mit mindestens einer Durchstecköffnung und/oder mindestens einer in die Durchstecköffnung mündenden Einführöffnung für ein zu schützendes aufrechtes Teil, wie einen Baumstamm, Pfosten oder dergleichen, insbesondere nach einem der Ansprüche 1 bis 4,
**dadurch gekennzeichnet, daß** die Durchstecköffnung (2, 2a, 2b, 2c) zumindest teilweise von einer verschwächten Randzone (4, 4a, 4b, 4c) umgeben ist.

6. Abdeckplatte nach einem der Ansprüche 1 bis 5,
**dadurch gekennzeichnet, daß** im Randbereich der Öffnung (2, 2a, 2c), vorzugsweise in der verschwächten Randzone (4, 4a, 4b, 4c), elastisch biegbare Zungen (6) ausgebildet sind, die vorteilhaft durch Schlitze (5) im Randbereich (4, 4a, 4b, 4c) gebildet sind.

7. Abdeckplatte nach einem der Ansprüche 1 bis 6,
**dadurch gekennzeichnet, daß** im Randbereich (4, 4a, 4b, 4c) der Öffnung (2, 2a, 2b, 2c), vorzugsweise im Bereich der verschwächten Randzone (4, 4a, 4b, 4c), mindestens eine, vorzugsweise mehrere Sollbruchstellen (11) vorgesehen sind, die vorteilhaft durch mindestens eine rillenartige Vertiefung in der Oberseite (12) der Abdeckplatte (1, 1a, 1b, 1c), vorzugsweise deren Randzone (4, 4a, 4b, 4c), gebildet sind.

8. Abdeckplatte nach Anspruch 7,
**dadurch gekennzeichnet, daß** die Sollbruchstelle (11) kreisförmig ausgebildet ist und vorteilhaft koaxial zur Achse der Durchführöffnung (2, 2a, 2b) verläuft.

9. Abdeckplatte nach einem der Ansprüche 1 bis 8,
**dadurch gekennzeichnet, daß** der äußere Rand (7, 7a, 7c, 7c' bis 7c"') der Abdeckplatte (1, 1a, 1b, 1c) kegelstumpfförmig abgeschrägt ist, derart, daß die Platte (1, 1a, 1b, 1c) an ihrer Unterseite (17, 17a, 17c) größeren Umriß hat als an ihrer Oberseite (12, 12a, 12c).

10. Abdeckplatte nach einem der Ansprüche 5 bis 9,
**dadurch gekennzeichnet, daß** die verschwächte Randzone (4, 4b) kreisförmigen Umriß hat.

11. Abdeckplatte nach einem der Ansprüche 5 bis 9,
**dadurch gekennzeichnet, daß** die Randzone (4a, 4c) unrunden Umriß hat.

12. , Abdeckplatte nach einem der Ansprüche 1 bis 11,
**dadurch gekennzeichnet, daß** sich die vorteilhaft elliptischen Umriß aufweisende Randzone (4a) über mehr als eine Plattenhälfte erstreckt.

13. Abdeckplatte nach einem der Ansprüche 1 bis 12,
**dadurch gekennzeichnet, daß** die Randzone (4, 4a, 4b) symmetrisch zu einer Plattenmittelebene (E) vorgesehen ist und vorteilhaft aus witterungsbeständigem, vorteilhaft wasserdurchlässigem oder wasserundurchlässigem Material besteht.

14. Abdeckplatte nach einem der Ansprüche 1 bis 13,
**dadurch gekennzeichnet, daß** die Dicke der Platte (1, 1a, 1b, 1c) etwa 1 cm beträgt.

15. Abdeckplatte nach einem der Ansprüche 1 bis 14,
**dadurch gekennzeichnet, daß** sie an ihrer Oberseite einen Kunstrasen aufweist, der vorteilhaft auf der Plattenoberseite (12, 12c) befestigt und/oder in einer Vertiefung vertieft angeordnet ist.

16. Abdeckplatte, deren Einführschlitz in die Durchstecköffnung mündet, insbesondere nach einem der Ansprüche 1 bis 15,
**dadurch gekennzeichnet, daß** der Einführschlitz (3, 3a, 3b) und/oder die die Zungen (6) begrenzenden Schlitze (5) schräg zur Ober- und/oder Unterseite (12, 12a bzw. 17, 17a) der Platte (1, 1a, 1b) geneigt verlaufen.

17. Abdeckplatte, insbesondere nach einem der Ansprüche 1 bis 16,
**dadurch gekennzeichnet, daß** der Einführschlitz (3b) und/oder die die Zungen (6) begrenzenden Schlitze (5) durch Ausstanzen gebildet sind.

18. Abdeckplatte nach einem der Ansprüche 1 bis 17,
**dadurch gekennzeichnet, daß** der Einführschlitz (3b) mindestens einen Profilabschnitt (20) aufweist, der sich vorteilhaft zwischen einem geraden Schlitzanfangsabschnitt (18) und einem geraden Schlitzendabschnitt (19) erstreckt.

19. Abdeckplatte nach Anspruch 18,
**dadurch gekennzeichnet, daß** der Profilabschnitt (20) des Schlitzes (3b) eine Lasche (23) umgibt, die etwa pilzförmig und/oder T-förmig mit einem, vorteilhaft etwa senkrecht zu den Anfang- und Endabschnitten (18, 19) des Schlitzes (3b) verlaufenden Halsteil (21) und einen Kopfteil (22) ausgebildet ist.

20. Abdeckplatte mit mindestens einer Durchstecköffnung für ein zu schützendes aufrechtes Teil, wie ein Verkehrsschild, einen Straßenpfosten oder dergleichen, insbesondere nach einem der Ansprüche 1 bis 19,
**dadurch gekennzeichnet, daß** die Platte (1c) unrunden Umriß und eine unrunde Durchstecköffnung (2c) hat.

21. Abdeckplatte nach Anspruch 20,
**dadurch gekennzeichnet, daß** die Platte (1c) rechteckigen Umriß hat.

22. Abdeckplatte nach Anspruch 20 oder 21,
**dadurch gekennzeichnet, daß** die Durchstecköffnung (2c) etwa dreieckförmigen Umriß hat.
